# EUROPÄISCHE PATENTANMELDUNG

(11) **EP 0 883 004 A1**
(43) Veröffentlichungstag der Anmeldung: **09.12.1998**
(21) Anmeldenummer: 98109250.5
(22) Anmeldetag: 20.05.1998
(51) Int. Cl.: G02B 6/44

(54) **Kassettenanordnung für Kabelmuffen oder Verteiler**

(30) Priorität: 03.06.1997 DE 19723250
(71) Anmelder: SIEMENS AKTIENGESELLSCHAFT, 80333 München (DE)
(72) Erfinder: Dotzer, Peter, 82335 Berg (DE); Einsle, Günter, 81479 München (DE); Mayr, Ernst, 82319 Starberg (DE); Zetsche, Lothar, 81475 München (DE)

(57) **Zusammenfassung**

Bei der Erfindung handelt es sich um eine Kassettenanordnung (1) für Kabelmuffen oder Verteiler, die aus mehreren einzelnen Kassetten (2) für Lichtwellenleiter zusammengesetzt ist, wobei die Kassetten (2) einzeln ausschwenkbar sind. Sie sind mittels einer lösbaren Arretierung im herausgeschwenkten Zustand fixierbar. Auf einer Kassette (2) sind zwei Umlenkscheiben (11) mit umlaufenden Nuten (29) angeordnet, in denen Überlängen von Lichtwellenleitern eingefügt sind.

## Beschreibung

Die Erfindung betrifft eine Kassettenanordnung für Kabelmuffen oder Verteiler, bestehend aus mehreren einzelnen Kassetten zur Verteilung und Aufnahme von Lichtwellenleitern, deren Überlängen und Lichtwellenleiterspleißen.

Aus der DE 44 39 853 - A1 ist eine Verbindungs-, Abzweig- oder Aufteilungsmuffe für Lichtwellenleiterkabel bekannt, bei der Lichtwellenleiterüberlängen im Muffenraum durch Schlaufenbildung der Lichtwellenleiter in Umlenkscheiben gehalten werden. Die einzelnen Umlenkscheiben werden hintereinander auf einem Bolzen aufgeschoben und fixiert. Die freien Enden der Lichtwellenleiter sind lose in Schlaufen geführt, wobei innerhalb der Schlaufen Spleißhalter angeordnet sind. Die Entnahme einer Lichtwellenleiterschlaufe erfolgt durch Herausnehmen eines Spleißhalters.

Aufgabe vorliegender Erfindung ist, die Zugänglichkeit und die Handhabung bei der Entnahme einer Lichtwellenleiterschlaufe zu verbessern, wobei die Führung und Ablegung für Einzelfasern, Bündeladern, Lichtwellenleiterbändchen geeignet sein muß. Die gestellte Aufgabe wird gemäß der Erfindung mit einer Kassettenanordnung der eingangs erläuterten Art dadurch gelöst, daß auf jeder Kassette im Abstand voneinander zwei Umlenkscheiben mit zumindest teilweise umlaufenden Nuten angeordnet sind, daß die Kassetten an einem Ende in einem Lagerblock schwenkbar gelagert sind, daß jede Kassette einzeln aus dem Kassettenverband herausschwenkbar ist und mit einer lösbaren Arretierung im herausgeschwenkten Zustand fixierbar ist, daß die Kassetten an ihren Einführungen für Lichtwellenleiter oder Lichtwellenleiterbändchen Klemmvorrichtungen aufweisen und daß Führungselemente für die Lichtwellenleiter bzw. Lichtwellenleiterbändchen zum Bewegungsausgleich beim Schwenkvorgang vorgesehen sind.

Vorteile mit einer Kassettenanordnung gemäß der Erfindung sind vor allem darin zu sehen, daß die Lichtwellenleiter oder Lichtwellenleiterbändchen auf schwenkbaren Kassetten eingeführt und gegebenenfalls mit den Spleißen abgelegt werden können. Das Herausschwenken der Kassetten und die Arretierung in Arbeitsposition erleichtert die Servicearbeiten erheblich, da jeweils nur die erforderliche Kassette aus dem Kassettenverband herausgeschwenkt wird, wobei die einzelnen Lichtwellenleiter bzw. Lichtwellenleiterbändchen zunächst in ihrer geordneten Position verbleiben. Bei normalen Haubenmuffen können zwei Ebenen von Kassettenblöcken auf einem Spleißträger übereinander angeordnet werden, wobei jeder Kassettenblock bis zu dreißig Kassetten enthält mit maximal zwölf Spleißverbindungen, oder dreihundertsechzig Lichtwellenleiterverbindungen pro Kassettenebene. Spleißkassetten, die zum Beispiel nicht zugänglich sein sollen, können entsprechend verriegelt und abgeschlossen werden, so daß sie vor öffentlichem Zugriff gesichert sind. Eine derartige Kassettenanordnung kann in Universalmuffen oder Verteilergehäusen eingesetzt werden, die im Boden oder auch am Mast montiert sein können. Aufgrund der Führung in den Umlenkscheiben auf der jeweiligen Kassette, können sowohl einzelne Lichtwellenleiter wie auch Lichtwellenleiterbändchen geführt werden, da durch entsprechende Diagonalführungen eine Kreuzung zwischen den Umlenkscheiben nicht nötig ist. Dies wird auch dadurch ermöglicht, daß die Spleiße im Spleißhalter schräg eingelegt werden, wie aus den Figuren deutlich wird. Zusätzlich zu der Kassettenanordnung ist ein Freiraum vorgesehen, in dem ungeschnittene Lichtwellenleiter oder Reserveadern untergebracht werden können. Die Einführung der im Muffenraum freigelegten Lichtwellenleiter oder Lichtwellenleiterbändchen aus den Bündeladern auf die einzelnen Kassetten erfolgt nach der Abfangung über eine einfache Klemmvorrichtung, wobei die Lichtwellenleiter bzw. Lichtwellenleiterbändchen dann auf der Kassette in Führungselementen eingeführt werden, die einen Bewegungsausgleich der Lichtwellenleiter bzw. Lichtwellenleiterbändchen beim Schwenkvorgang der Kassette zulassen. Die Kassetten sind zweckmäßigerweise in Kassettenblöcken zusammengefaßt und sind in einem Lagerblock auf einer Achse gelagert. Beim Ausschwenken einer Kassette aus dem Kassettenblock heraus in Horizontallage erfolgt eine Fixierung bzw. Arretierung, die nach den Servicearbeiten wieder entriegelt werden kann. Das Einlegen der Lichtwellenleiter bzw. Lichtwellenleiterbändchen in die zumindest teilweise umlaufenden Nuten der Umlenkscheiben erfolgt in einfacher Weise, wobei beim Einlegevorgang zugleich eine Sicherung gegen unbeabsichtigtes Herausspringen der Lichtwellenleiter bzw. Lichtwellenleiterbändchen wirksam wird. Das Einlegen und Fixieren ist somit einfach und zeitsparend. Zum Spleißen werden dann die entsprechenden Lichtwellenleiter bzw. Lichtwellenleiterbändchen aus den Nuten der Umlenkscheiben entnommen und zum Spleißgerät geführt. Eine Entnahme der Kassette ist somit nicht nötig. Nach dem Spleißen erfolgt die Rückführung in die Nuten der Umlenkscheiben und die Ablage des Spleißes zwischen den beiden Umlenkscheiben im Spleißhalter. Bisher wurde bei der üblichen Kassettentechnik die gesamte Kassette entnommen und im Spleißgerät abgelegt, wobei auch gewisse Schwierigkeiten wie die Entnahme der Kassette bezüglich des zusätzlichen Längenplus für die Zuführung zu den Kassetten gegeben waren. Durch die Technik gemäß der Erfindung wird eine erhebliche Verbesserung und Erleichterung bei Servicearbeiten erreicht, wobei die Übersichtlichkeit des gesamten Systems in jeder Phase erhalten bleibt. Da beliebig viele Kassetten aneinander reihbar sind, können je nach Gehäusegröße entsprechend große Zeilen zusammengestellt werden. Dadurch erschließt sich auch die Möglichkeit des Einsatzes in großen Verteileranlagen. Weiterhin kann jede Kassette im Lagerblock um 180° gedreht montiert werden, so daß der Zugriff auch von der anderen Seite möglich ist.

Die Erfindung wird nun anhand von sieben Figuren näher erläutert.
- Figur 1: zeigt eine Kassettenanordnung gemäß der Erfindung innerhalb einer Haubenmuffe.
- Figur 2: zeigt das Prinzip des Schwenkens.
- Figur 3: zeigt die erfindungsgemäße Kassettenanordnung mit einer herausgeschwenkten Kassette.
- Figur 4: verdeutlicht in einer Skizze die Kassettenanordnung.
- Figur 5: zeigt einen Rückhalter für Lichtwellenleiter bzw. Lichtwellenleiterbändchen zum Einsatz in den Umlenkscheiben in einer Draufsicht.
- Figur 6: zeigt den Rückhalter nach Figur 6 im Profil.
- Figur 7: zeigt eine sternförmige Kassettenanordnung.

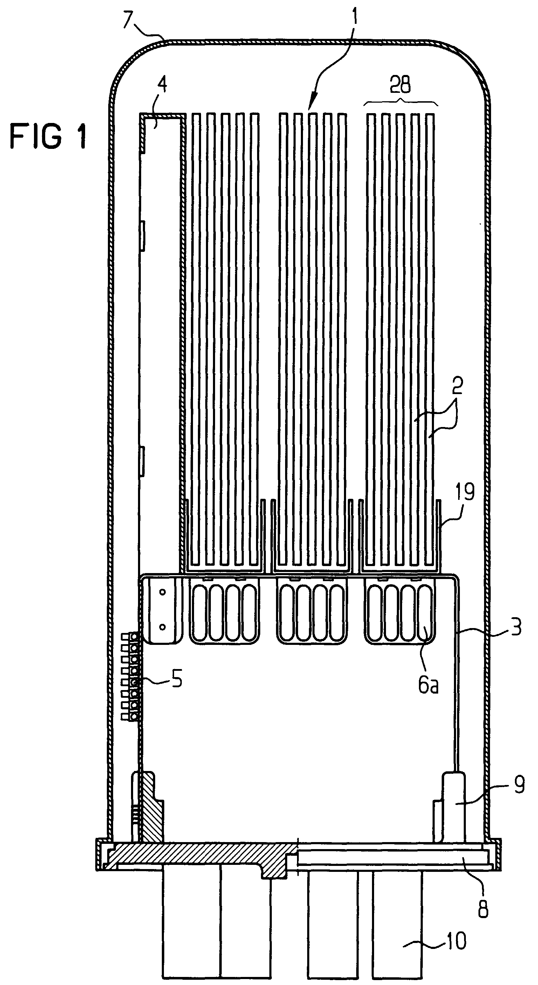

In Figur 1 wird eine erfindungsgemäße Kassettenanordnung 1 gezeigt, die zum Beispiel auf dem Dichtungskörper 8 einer Haubenmuffe 7 angeordnet ist. Hierzu ist auf dem Dichtungskörper 8 in entsprechenden Halterungen 9 ein Kassettenträger 3 vorzugsweise schwenkbar angeordnet. Auf diesem Kassettenträger 3 sind Lagerblöcke 19 angeordnet, in denen die Kassetten 2 in Kassettenblöcken 28 zusammengefaßt sind, wobei jede einzelne Kassette drehbar gelagert ist. Im Kassettenträger 3 sind zweckmäßigerweise zusätzlich Abfangvorrichtungen 6a angeordnet, an denen die Lichtwellenleiterbündeladern abgefangen werden können. Von hier aus werden die Lichtwellenleiter oder Lichtwellenleiterbändchen auf die einzelnen Kassetten 2 eingeführt. Weiterhin sind am Kassettenträger 3 Klemmvorrichtungen 5 vorgesehen, die zum Beispiel zur Klemmung von Erdleitungen usw. verwendet werden können. Weiterhin befindet sich am Kassettenträger 3 ein Aufnahmebehälter 4 zum Beispiel in Form eines Rahmens mit entsprechenden Rückhaltern für ungeschnittene Lichtwellenleiteradern, Lichtwellenleiterbändchen oder Lichtwellenleiterreserveadern. Die Kassetten 2 sind hier in den Kassettenblöcken 28 parallel nebeneinander angeordnet. Weiterhin ist gezeigt, daß der Dichtungskörper 8 für die Einführungen der Lichtwellenleiterkabel mit Einführungsstutzen 10 versehen ist, die in herkömmlicher Weise abgedichtet werden, zum Beispiel mit entsprechenden Schrumpfschläuchen oder Preßdichtungen.

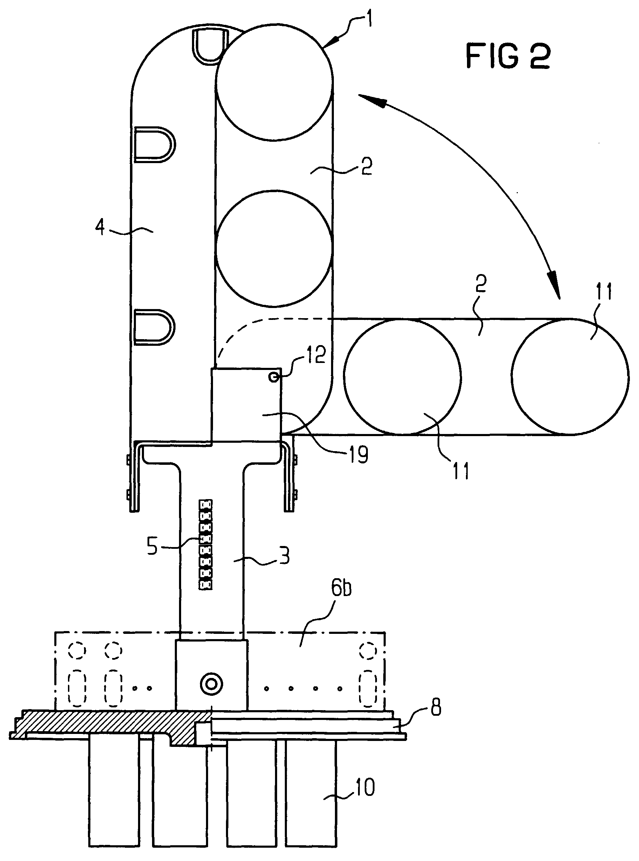

In Figur 2 ist das Prinzip gemäß der Erfindung dargestellt, nach dem eine einzelne Kassette 2 aus der senkrecht angeordneten Kassettenanordnung 1 in die waagerechte Servicelage ausgeschwenkt werden kann. Dabei wird deutlich, daß die beiden Umlenkscheiben 11 im herausgeschwenkten Zustand voll zugänglich sind, so daß die dazwischen verlaufenden Lichtwellenleiter entsprechend bearbeitet werden können. Die Schwenkung erfolgt um eine Achse 12, die in einem Lagerblock 19 auf dem Kassettenträger 3 angeordnet ist. Der Doppelpfeil deutet die Schwenkrichtungen an. In dieser Seitenansicht wird auch die Anordnung des Aufnahmebehälters 4 für die Aufnahme von ungeschnittenen Lichtwellenleitern, Lichwellenleiterbändchen oder Reserveadern deutlich. Bei dieser Ausführung ist angedeutet, daß die Abfangvorrichtungen 6b auch direkt am Dichtungskörper 8 angebracht werden können, so daß die eingeführten Lichtwellenleiterkabel bzw. Lichtwellenleiterbündeladern bereits hier festgelegt werden.

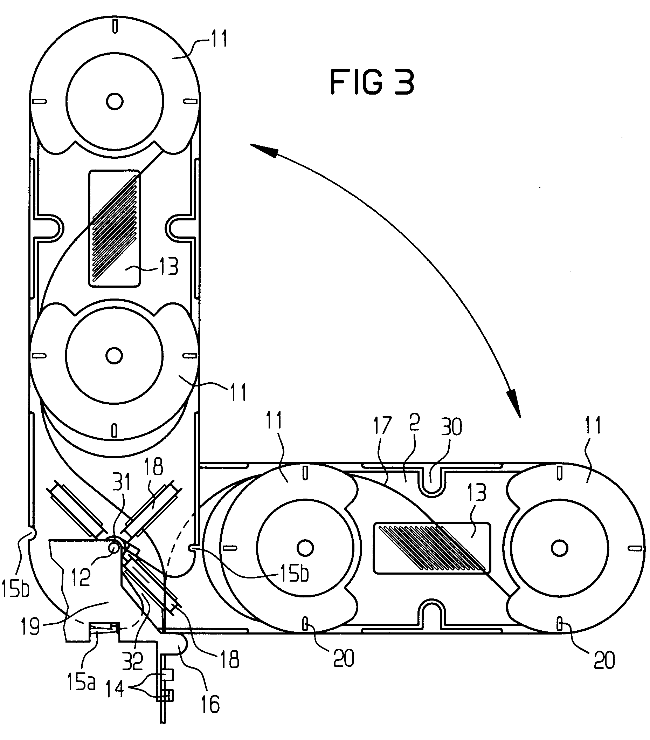

In Figur 3 wird verdeutlicht, daß die Überlängen der Lichtwellenleiter 17 zwischen den beiden Umlenkscheiben 11 in deren umlaufenden Nuten auf der Kassette 2 geführt werden, wobei entsprechende Rückhalter das Herausspringen der Lichtwellenleiter bzw. Lichtwellenleiterbändchen aus den Nuten verhindern. Diese Rückhalter sind in den Nuten eingefügt, so daß außen nur deren Rastnasen 20 in dieser Figur zu erkennen sind. Die Lichtwellenleiter werden diagonal zwischen den beiden Umlenkscheiben 11 geführt, wobei die Spleiße in schräg angeordneten Nuten eines auswechselbaren Spleißhalters 13 gehalten werden. Die zunächst in Klemmvorrichtungen 14 eingeführten Lichtwellenleiter 17 werden anschließend auf der Kassette 2 in einem Führungselement 18 eingeführt, das ein unkontrolliertes Herausspringen der Lichtwellenleiter bzw. Lichtwellenleiterbändchen verhindert, das jedoch andererseits auch einen Bewegungsausgleich beim Schwenkvorgang der Kassette 2 zuläßt. Es handelt sich bei diesen Führungselementen 18 zum Beispiel um U-förmige Winkelanordnungen, wobei die Öffnung zweckmäßigerweise mit einem elastischen Element versehen oder als Federlippe ausgebildet ist, so daß ein unbeabsichtigtes Herausspringen verhindert wird. Weiterhin sind eingebogene Winkel 30 als weitere Rückhalteelemente für Lichtwellenleiter am Rand der Kassetten 2 angeordnet. Im Endzustand der herausgeschwenkten Kassette 2 erfolgt die Arretierung in dieser Servicelage durch Einklinken einer Rastnase 15a im Lagerblock 19 in eine Rastnut 15b der Kassette 2. Nach Beendigung der Servicearbeiten kann diese Arretierung entriegelt und die Kassette 2 wieder in den Lagerblock 19 zurückgeschwenkt werden.

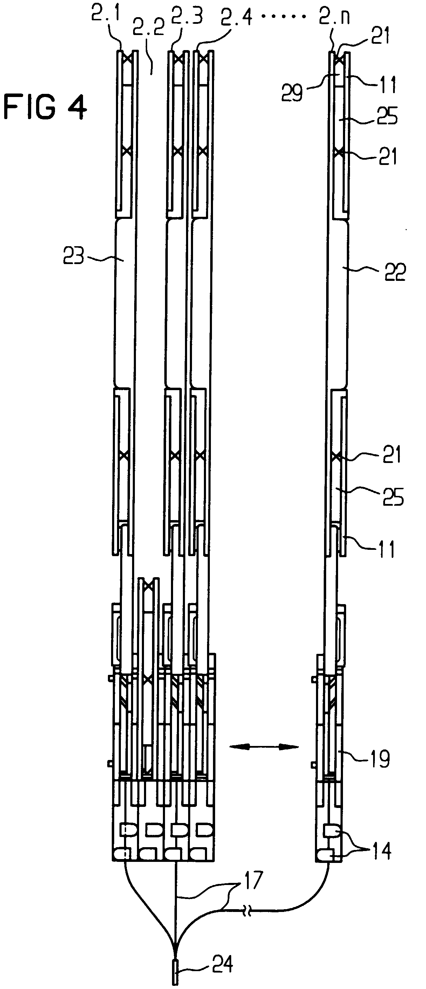

Jede Kassette 2 besitzt am Ende, an dem sie im Lagerblock 19 auf die Achse 12 aufgesetzt wird, einen Einführungskanal 32. Dieser Einführungskanal 32 verjüngt sich konusförmig nach einwärts und weist am Ende eine Rasterung oder federnde Verstärkung 31 auf, die beim Aufschieben wirksam wird, so daß die Kassette auf der Achse 12 einschnappt und nicht mehr von selbst herausfällt. Die Rasterung kann jedoch manuell überwunden werden, wenn die Kassette für Servicearbeiten voll entnommen werden muß. Weiterhin ist angezeigt, daß Rastkerben 15b beidseitig an der Kassette vorhanden sind, so daß die Rasterung mit Rastnase 15a auch wirksam wird, wenn die Kassette um 180° verdreht eingesetzt wird, wie dies in Figur 4 mit der rechten Kassette gezeigt wird.

In Figur 4 ist ein Kassettenblock aus mehreren Kassetten 2.1 bis 2.n skizziert. Daraus wird erkennbar, daß in den umlaufenden Nuten 29 der Umlenkscheiben 11 jeweils ein elastischer Ring 25 eingefügt ist, der auswärts gerichtete - hier nicht sichtbare - Schenkelpaare aufweist, an deren Enden gegeneinander gerichtete Hebungen 21 aus elastischem Material angeordnet sind. Auf diese Weise ist möglich, daß Lichtwellenleiter bzw. Lichtwellenleiterbändchen durch Eindrücken in die Nut eingeführt werden können, wobei die Lichtwellenleiter dann jedoch nicht mehr unbeabsichtigt herausspringen können. Außerdem sind an den Kassetten 2.1 bis 2.n griffähnliche Abwinkelungen 22 bzw. 23 angebracht, mit deren Hilfe der Zugriff zum Ausschwenken der Kassetten von links bzw. von rechts ermöglicht wird. Die zweite Kassette 2.2 von links ist in Servicestellung gezeichnet. In diesem Fall wird angedeutet, daß Lichtwellenleiter bzw. Lichtwellenleiterbändchen 17 aus einer Bündelader 24 zur Einführung in die Kassetten 2.1 bis 2.n gelangen, wobei die einzelnen Lichtwellenleiter bzw. Lichtwellenleiterbändchen in Klemmvorrichtungen 14 fixiert werden. In diesem Fall sind hier zwei gegeneinander gerichtete Winkelaufbiegungen vorgesehen, zwischen denen der betreffende Lichtwellenleiter bzw. das Lichtwellenleiterbändchen eingefädelt wird. Die beiden gegeneinander gerichteten Winkelaufbiegungen 14 sind in der Länge so bemessen, daß ein Herausspringen des eingeführten Lichtwellenleiters bzw. Lichtwellenleiterbändchens in der Einbaulage nicht möglich ist.

Figur 5 zeigt einen als Rückhalter für Lichtwellenleiter ausgebildeten Ring 25, der in die umlaufende Nut einer Umlenkscheibe eingezogen wird. Er besteht aus elastischem Material, so daß das Einbringen ohne Schwierigkeiten durch Aufziehen über die Nutränder erfolgen kann. In diesem Fall sind drei nach auswärts gerichtete Schenkelpaare 26-26 (hier ist nur jeweils ein Schenkel 26 sichtbar) angeordnet. An deren Enden sind gegeneinander gerichtete Erhebungen 21 angedeutet, die sich nach dem Einziehen in die Nut gegenseitig federnd berühren und die Nut elastisch verschließen, wie in Figur 4 bereits erläutert ist. Die Schenkelpaare 26-26 sind zusätzlich mit nach auswärts gerichteten Erhebungen 20 versehen, die beim Einziehen in die Nut in entsprechenden Aussparungen der Umlenkscheiben einrasten, wie in Figur 3 gezeigt ist. Auf diese Weise sind diese elastischen Rückhalter gegen Herausfallen und Verdrehen gesichert.

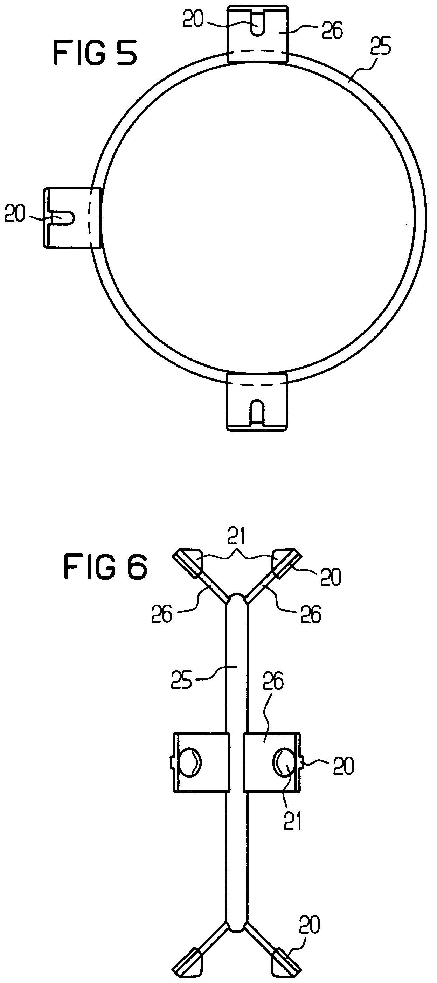

Figur 6 zeigt den als Rückhalter ausgebildeten Ring 25 nach Figur 5 in einer Frontansicht. Hieraus wird deutlich, daß die nach auswärts gerichteten Schenkelpaare 26-26 an deren freien Enden gegeneinander gerichtete Erhebungen 21 mit den Rasterhebungen 20 aufweisen. Beim Einziehen des Rings 25 in die Nut einer Umlenkscheibe werden die Schenkelpaare 26-26 zusammengedrückt und bilden den elastischen Verschluß der Öffnung mit den gegeneinander gerichteten Erhebungen 21. Beim Einziehen des Rings 25 in die Nut werden auch die Rasterhebungen 20 in den vorgesehenen Rastöffnungen der Umlenkscheiben verankert.

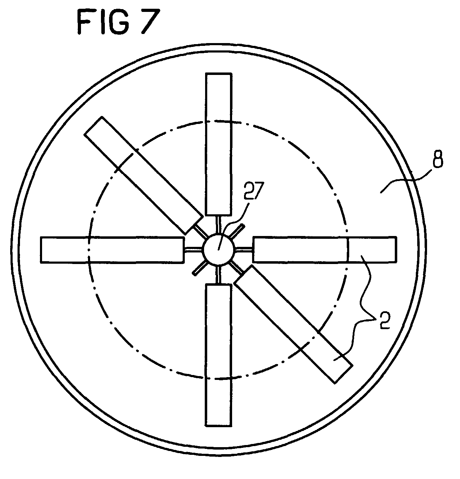

In Figur 7 ist schließlich noch dargestellt, daß eine Kassettenanordnung mit Kassetten 2 der beschriebenen Art auch sternförmig zu einem Kassettenblock zusammengestellt werden kann, wobei dann zweckmäßigerweise ein zentraler Kassettenträger 27 vorzusehen ist, der ebenfalls im Dichtungskörper 8 einer Kabelmuffe angeordnet werden kann. Im übrigen können hier bei dieser Ausführungsform alle beschriebenen Merkmale der Erfindung ebenfalls eingesetzt werden.

## Patentansprüche

1. Kassettenanordnung für Kabelmuffen oder Verteiler, bestehend aus mehreren einzelnen Kassetten zur Verteilung und Aufnahme von Lichtwellenleitern, deren Überlängen und Lichtwellenspleißen,
**dadurch gekennzeichnet,**
daß auf jeder Kassette (2) im Abstand voneinander zwei Umlenkscheiben (11) mit zumindest teilweise umlaufenden Nuten (29) angeordnet sind, daß die Kassetten (2) an einem Ende in einem Lagerblock (19) schwenkbar gelagert sind, daß jede Kassette (2) einzeln aus dem Kassettenverband (28) herausschwenkbar ist und mit einer lösbaren Arretierung (15) im herausgeschwenkten Zustand fixierbar ist, daß die Kassetten (2) an ihren Einführungen für Lichtwellenleiter oder Lichtwellenleiterbändchen Klemmvorrichtungen (14) aufweisen und daß Führungselemente (18) für die Lichtwellenleiter bzw. Lichtwellenleiterbändchen (17) zum Bewegungsausgleich beim Schwenkvorgang vorgesehen sind.

2. Kassettenanordnung nach Anspruch 1,
**dadurch gekennzeichnet,**
daß ein Spleißträger (13) zur Aufnahme von Lichtwellenleiterspleißen zwischen den beiden Umlenkscheiben (11) angeordnet ist, wobei die Spleiße diagonal verlaufend in den Spleißhalter (13) eingelegt sind.

3. Kassettenanordnung nach einem der vorhergehenden Ansprüche,
**dadurch gekennzeichnet,**
daß die Umlenkscheiben (11) Rückhalter für die Lichtwellenleiter bzw. Lichtwellenleiterbändchen aufweisen.

4. Kassettenanordnung nach Anspruch 3,
**dadurch gekennzeichnet,**
daß als Rückhalter für Lichtwellenleiter ein Ring (25) aus elastischem Material in die Nut (29) einer Umlenkscheibe (11) rastend eingefügt ist, daß am Ring (25) mehrere nach auswärts gerichtete Schenkelpaare (26-26) angeordnet sind, daß an den Enden der Schenkel (26) jeweils eines Schenkelpaares (26-26) gegeneinander gerichtete Erhebungen (21) angeordnet sind, die im eingesetzten Zustand federnd so aneinander liegen, daß die Einführung von Lichtwellenleitern bzw. Lichtwellenleiterbändchen möglich, daß selbständiges Herausspringen jedoch nicht möglich ist.

5. Kassettenanordnung nach Anspruch 2,
**dadurch gekennzeichnet,**
daß der Spleißträger (13) auswechselbar und den jeweils verwendeten Spleißverbindern anpaßbar ist.

6. Kassettenanordnung nach einem der vorhergehenden Ansprüche,
**dadurch gekennzeichnet,**
daß die Arretierung der Kassetten im herausgeschwenkten Zustand durch eine auslösbare Rastnase (15a) erfolgt, die in eine Rastnut (15b) einer Kassette (2) eingeklinkt ist.

7. Kassettenanordnung nach einem der vorhergehenden Ansprüche,
**dadurch gekennzeichnet,**
daß die Kassetten (2) zu einem Kassettenblock (28) zusammengefaßt sind.

8. Kassettenanordnung nach einem der vorhergehenden Ansprüche,
**dadurch gekennzeichnet,**
daß die Kassetten (2) an einem Kassettenträger (3) parallel nebeneinander angeordnet sind.

9. Kassettenanordnung nach einem der Ansprüche 1 bis 7,
**dadurch gekennzeichnet,**
daß die Kassetten an einem zentralen Kassettenträger (27) sternförmig angeordnet sind.

10. Kassettenanordnung nach einem der Ansprüche 8 oder 9,
**dadurch gekennzeichnet,**
daß der Kassettenträger (3) schwenkbar angeordnet ist.

11. Kassettenanordnung nach einem der vorhergehenden Ansprüche,
**dadurch gekennzeichnet,**
daß an der Kabeleinführung und/oder am Kassettenträger (3) Abfangvorrichtungen (6a, 6b) für Lichtwellenleiterkabel und/oder Lichtwellenleiterbündeladern angeordnet sind.

12. Kassettenanordnung nach einem der Ansprüche 8 bis 11,
**dadurch gekennzeichnet,**
daß der Kassettenträger (3) am Dichtungskörper einer Kabelmuffe, vorzugsweise einer Haubenmuffe (7), befestigt ist.

13. Kassettenanordnung nach einem der vorhergehenden Ansprüche,
**dadurch gekennzeichnet,**
daß Anschlußklemmen (5) für Erdungsdurchführungen angeordnet sind.

14. Kassettenanordnung nach einem der vorhergehenden Ansprüche,
**dadurch gekennzeichnet,**
daß ein Aufnahmebehälter (4) für ungeschnittene Lichtwellenleiter, Lichtwellenleiterbändchen oder Lichtwellenleiterreserveadern am Kassettenträger (3) angeordnet ist.

15. Kassettenanordnung nach einem der vorhergehenden Ansprüche,
**dadurch gekennzeichnet,**
daß die Kassettenblöcke in mehreren Ebenen übereinander angeordnet sind.
